# FASCICULE DE BREVET EUROPEEN

(11) **EP 2 825 414 B1**
(45) Date de publication et mention de la délivrance du brevet: **09.12.2020**
(21) Numéro de dépôt: 13710482.4
(22) Date de dépôt: 19.02.2013
(51) Int. Cl.: B60N 2/01, B60N 2/015, B60N 2/36

(54) **DISPOSITIF DE FIXATION POUR UNE BANQUETTE ARRIÈRE DE VÉHICULE AUTOMOBILE**
BEFESTIGUNGSVORRICHTUNG FÜR EINE RÜCKSITZBANK EINES KRAFTFAHRZEUGS
FIXING DEVICE FOR A MOTOR VEHICLE REAR BENCH SEAT

(30) Priorité: 13.03.2012 FR 1252225
(43) Date de publication de la demande: 21.01.2015
(73) Titulaire: Renault s.a.s., 92100 Boulogne-Billancourt (FR)
(72) Inventeur: LEFEBVRE, Benjamin, 91470 Les Molieres (FR)
(86) Numéro de dépôt international: PCT/FR2013/050338
(87) Numéro de publication internationale: WO 2013/135984

(56) Documents cités:
- DE-A1- 19 841 979
- US-B1- 6 179 363

## Description

L'invention concerne un dispositif de fixation pour une banquette arrière de véhicule automobile. Elle concerne plus particulièrement un dispositif de fixation de banquette arrière du type comportant au moins un organe d'ancrage de la banquette monté solidaire du plancher, comprenant un fil métallique reposant entre des premier et deuxième points de fixation situés de part et d'autre d'une cavité ménagée dans le plancher et présentant une zone d'effort sensiblement médiane destinée à coopérer avec un organe d'accrochage porté par une platine fixée sur une traverse agencée à l'arrière de la banquette dans sa partie basse, l'organe d'ancrage comprenant une pièce de liaison unissant le fil métallique à la cavité de manière à s'opposer aux déformations du fil métallique lorsque le fil métallique est sollicité au niveau de sa zone d'effort médiane par l'organe d'accrochage de la banquette.

On connaît de nombreux exemples de dispositif de fixation de banquette arrière de ce type, comme décrit par exemple dans le document DE 198 41 979. Par ailleurs, certaines banquettes de véhicule automobile sont pourvues de points d'accrochage destinés à servir de fixation pour un siège d'enfant par exemple. De manière connue, ces points de fixation sont constitués d'attaches formant une excroissance destinée à coopérer avec des attaches correspondantes du siège d'enfant. Ces attaches sont classiquement montées par paires et fixées sur la banquette au niveau de la jonction assise/dossier. Ces points de fixation doivent en outre répondre aux conditions fixées par les normes de sécurité en vigueur, notamment celles fixées par la norme ISOFIX (norme ISO 13216 d'ancrage pour les sièges pour enfants).

Or, la conception du dispositif de fixation de banquette arrière du type décrit précédemment ne permet pas de garantir le respect du critère réglementaire d'homologation ECE14 Rang 2 Isofix frontal sur certains modèles de véhicule. Selon les conditions fixées par ce critère réglementaire d'homologation, le déplacement des points de fixation Isofix embarqués sur la banquette ne doit pas dépasser 125mm lorsqu'ils sont chacun soumis à un effort de 800daN maintenu pendant au moins 200ms. Ce cahier des charges d'homologation n'est pas respecté pour certains modèles de véhicule automobile à cause d'une importante déformation des fils métalliques mis en œuvre au niveau des organes d'ancrage de la banquette arrière sur le plancher. On constate en effet une très nette déformation et une mise en « V » du fil métallique lors de la mise en œuvre du test d'homologation selon le cahier des charges exposé précédemment, conduisant à un déplacement des points de fixation Isofix dépassant le déplacement maximal autorisé.

L'invention remédie à cet inconvénient en proposant un dispositif du type décrit précédemment capable d'assurer une meilleure tenue du fil métallique.

Dans ce but, le dispositif de l'invention, par ailleurs conforme à la définition générique qu'en donne le préambule ci-dessus, est essentiellement caractérisé en ce que la pièce de liaison comporte un élément de structure adapté pour prendre appui sur le fil métallique de part et d'autre de la zone d'effort médiane du fil métallique et se prolongeant vers l'avant et l'arrière par des pattes de fixation dirigées vers une surface de fond de la cavité et dont des extrémités respectives constituent des zones de fixation respectivement avant et arrière avec la surface de fond de la cavité.

L'invention permet ainsi d'obtenir un renfort du fil métallique servant à l'ancrage de la banquette arrière sur le plancher, particulièrement bien adapté à la prise en compte des efforts qui s'appliquent sur celui-ci en cas de sollicitation des points de fixation Isofix embarqués sur la banquette. L'utilisation de la pièce de liaison selon l'invention unissant le fil métallique à la cavité va permettre de garantir, en cas de sollicitation importante de la zone d'effort du fil métallique, une bonne tenue mécanique de celui-ci en limitant sa déformation, notamment en deçà d'une valeur limite requise pour satisfaire au critère réglementaire relatif au déplacement maximal autorisé des points de fixation Isofix embarqués sur la banquette (critère d'homologation ECE14 Rang 2 Isofix frontal). Un autre avantage de l'invention est que cet assemblage nécessite l'emploi d'une seule pièce de liaison s'adaptant aisément à l'organe d'ancrage existant de la banquette sans nécessiter aucune modification de celui-ci pour respecter les critères d'homologation. Ceci présente un intérêt évident pour le coût de fabrication du dispositif de fixation de l'invention.

De préférence, le dispositif de fixation de banquette arrière selon l'invention présente encore une ou plusieurs des caractéristiques suivantes :
- les zones de fixation avant et/ou arrière sont constituées par les extrémités respectives de deux pattes de fixation indépendantes ;
- chaque zone de fixation respectivement avant et arrière comprend au moins un point de liaison destiné à réaliser l'assemblage de la zone de fixation respectivement avant et arrière avec la surface de fond de la cavité ;
- chaque point de liaison est réalisé par l'intermédiaire d'une liaison vissée ou d'une liaison soudée.

D'autres caractéristiques et avantages de l'invention ressortiront clairement de la description qui en est faite ci-après, à titre indicatif et nullement limitatif, en référence aux dessins annexés, dans lesquels :
- la Figure 1 est une vue générale de profil illustrant le montage d'une banquette arrière sur le plancher du véhicule automobile, ainsi qu'une vue de détail du dispositif de fixation de la banquette sur la plancher conforme à l'art antérieur ;
- la Figure 2 est une vue de détail en perspective d'un élément de liaison destiné à venir renforcer le dispositif de fixation conformément à l'invention ; et
- la Figure 3 montre une vue de dessus du plancher du véhicule automobile où sont illustrés deux dispositifs de fixation pour la banquette arrière dans lesquels l'élément de liaison de la figure 2 est mis en place conformément à l'invention, et une vue de détail du dispositif de fixation conformément à l'invention.

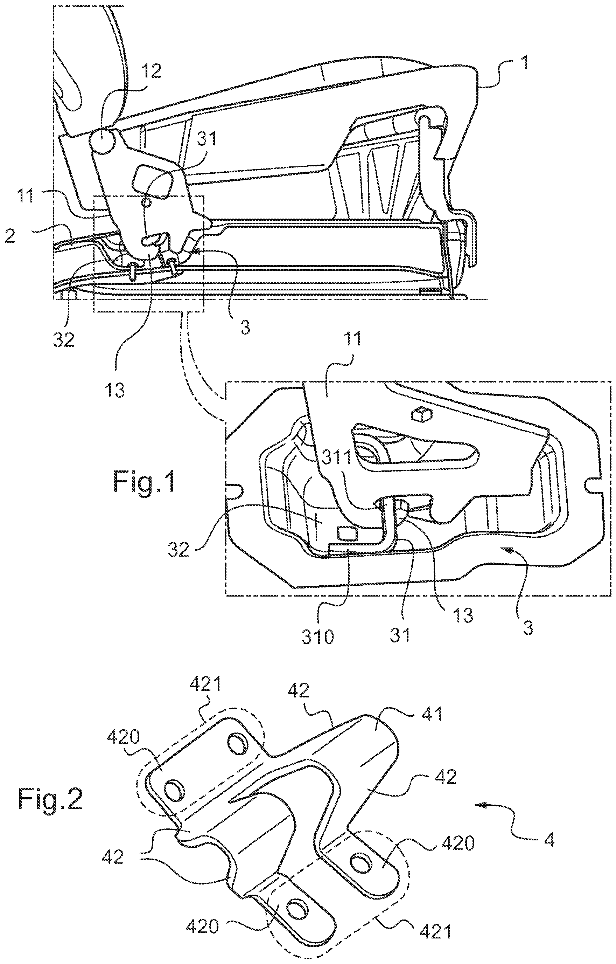

La figure 1 illustre une banquette arrière 1 de véhicule automobile, par exemple une banquette de rang deux, montée sur un plancher 2 du véhicule automobile. Pour ce faire, la banquette 1 comporte classiquement deux platines 11 de fixation arrière montées solidaire d'une traverse 12 agencée à l'arrière de la banquette dans sa partie basse, par exemple sensiblement au niveau de la jonction entre l'assise et le dossier de la banquette. Chaque platine de fixation 11 est réalisée en matériau métallique et est conformée dans sa partie inférieure de manière à former un organe d'accrochage 13 destiné à coopérer avec un organe d'ancrage 3 de la banquette monté solidaire du plancher 2. Cet organe d'ancrage 3 se présente classiquement sous la forme d'un fil métallique 31 dans lequel vient s'accrocher l'organe d'accrochage 13 porté par la platine de fixation arrière 11 pour la fixation de la banquette 1 sur le plancher 2. Pour permettre cet accrochage, le fil métallique 31 de l'organe d'ancrage 3 est fixé transversalement dans une cavité 32 formée dans le plancher, qui s'étend selon un axe longitudinal du véhicule automobile. Plus précisément, le fil métallique 31 est fixé par ses extrémités respectives 310 au niveau d'une partie supérieure des parois latérales de la cavité 32, par exemple par des points de soudure, permettant à l'organe d'accrochage 13 de la platine 11 de fixation arrière de la banquette 1 de venir s'accrocher au niveau d'une zone d'effort sensiblement médiane 311 du fil métallique 31 ainsi fixé dans la cavité 32.

Comme il a déjà été expliqué en préambule, le fil métallique 31 de l'organe d'ancrage 3 de la banquette sur le plancher 2 du véhicule automobile est la zone sollicitée lors de l'application d'un effort au niveau des points de fixation ISOFIX embarqués sur la banquette et est susceptible, en cas de forte sollicitation par l'organe d'accrochage 13 de la platine 12, de se déformer de manière importante entraînant ainsi un déplacement des points de fixation ISOFIX au-delà de ce qui est requis par la norme.

Aussi, conformément à l'invention, une pièce de liaison 4, illustrée isolément à la figure 2, est destinée à être montée dans la cavité 32 de l'organe d'accrochage 3 pour servir de renfort au fil métallique 31 en unissant ce dernier à la cavité 32 de manière à s'opposer aux déformations du fil métallique 31 lorsque celui-ci est sollicité au niveau de sa zone d'effort médiane 311 par l'organe d'accrochage 13 de la banquette. La pièce de liaison 4, réalisée en matériau métallique, comporte pour ce faire un élément de structure 41 présentant une partie échancrée et se prolongeant vers l'avant et l'arrière par des pattes de fixation 42 dont des extrémités respectives 420 sont agencées pour constituer des zones de fixation 421 respectivement avant et arrière. Comme illustré sur l'exemple de la figure 2, l'une des deux zones de fixation 421, par exemple la zone de fixation arrière, peut être constituée par les extrémités respectives 420 de deux pattes de fixation 42 indépendantes.

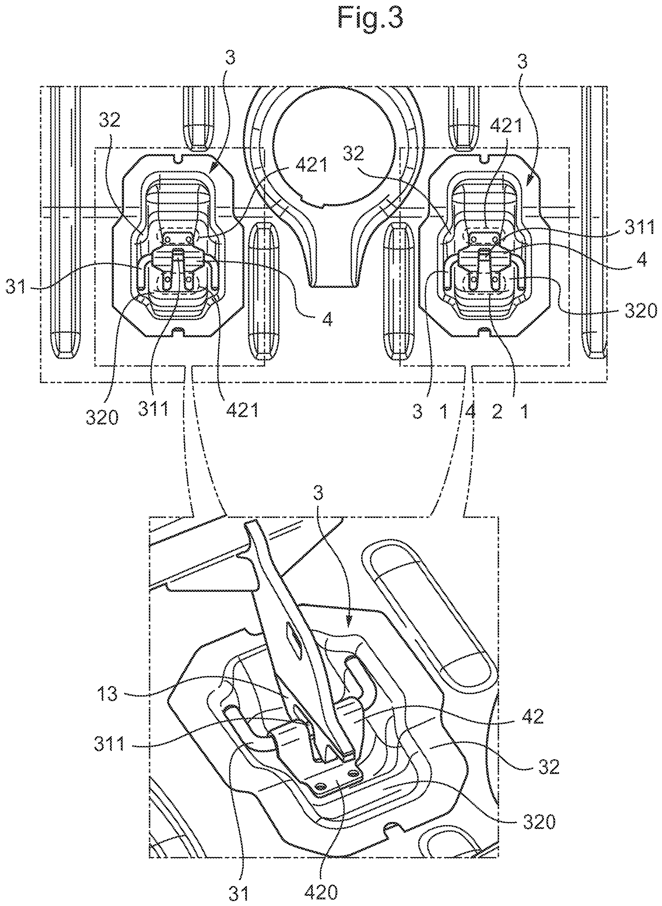

La figure 3 illustre en vue de dessus la pièce de liaison 4 illustrée à la figure 2, disposée au niveau de chacun de deux organes d'ancrage 3 de la banquette. Ainsi, la pièce de liaison 4 est disposée dans la cavité 32 de manière que l'élément de structure 41 vienne prendre appui sur le fil métallique 31 de part et d'autre de la zone d'effort médiane 311 laissée libre à travers la partie échancrée de la pièce de liaison 4, tandis que les pattes de fixation 42 prolongeant l'élément de structure à l'avant et à l'arrière sont fixées sur une surface de fond 320 de la cavité 32 par l'intermédiaire des zones de fixation 421 respectivement avant et arrière. Des moyens de fixation de la pièce de liaison 4 à la surface de fond 320 de la cavité 32 comprennent un ou plusieurs points de liaison en zone de fixation respectivement avant et arrière, réalisé par l'intermédiaire d'une liaison vissée ou d'une liaison soudée. Bien entendu, le nombre et/ou le type de points de liaison en zone de fixation 421 respectivement avant et arrière, destinés à réaliser l'assemblage de la pièce de liaison 4 avec la surface de fond 320 de la cavité, n'est pas limitatif.

Grâce à cet agencement, la pièce de liaison 4 vient enserrer le fil métallique 31 dans la cavité 32 en procurant une contrainte apte à s'opposer aux déformations que subit le fil métallique 31 lorsqu'il est sollicité par l'organe d'accrochage 13 de la banquette. Ce renfort du fil métallique 13 par l'élément de liaison 4, au plus proche de la zone médiane 311 d'effort du fil métallique 31, permet de garantir un bon maintien du fil métallique 31 en limitant sa déformation et sa « mise en V » dans des limites acceptables eu égard au critère réglementaire relatif au déplacement maximal autorisé des points de fixation Isofix embarqués sur la banquette.

## Revendications

1. Dispositif de fixation d'une banquette (1) arrière de véhicule automobile sur un plancher (2) du véhicule automobile, comportant au moins un organe d'ancrage (3) de la banquette (1) adapté pour être monté solidaire du plancher (2), comprenant un fil métallique (31) adapté pour reposer entre des premier et deuxième points de fixation situés de part et d'autre d'une cavité (32) ménagée dans le plancher (2) et présentant une zone d'effort (311) sensiblement médiane destinée à coopérer avec un organe d'accrochage (13) porté par une platine (11) fixée sur une traverse (12) agencée à l'arrière de la banquette (1) dans sa partie basse, l'organe d'ancrage (3) comprenant une pièce de liaison (4) unissant le fil métallique (31) à la cavité (32) de manière à s'opposer aux déformations du fil métallique (31) lorsque le fil métallique (31) est sollicité au niveau de sa zone d'effort médiane (311) par l'organe d'accrochage (13) de la banquette, **caractérisé en ce que** la pièce de liaison (4) comporte un élément de structure (41) adapté pour prendre appui sur le fil métallique (31) de part et d'autre de la zone d'effort médiane (311) du fil métallique (31) et se prolongeant vers l'avant et l'arrière par des pattes de fixation (42) dirigées vers une surface de fond (320) de la cavité (32) et dont des extrémités respectives (420) constituent des zones de fixation (421) respectivement avant et arrière avec la surface de fond (320) de la cavité (32).

2. Dispositif selon la revendication 1, **caractérisé en ce que** les zones de fixation (421) avant et/ou arrière sont constituées par les extrémités respectives (420) de deux pattes de fixation (42) indépendantes.

3. Dispositif selon la revendication 1 ou 2, **caractérisé en ce que** chaque zone de fixation (421) respectivement avant et arrière comprend au moins un point de liaison destiné à réaliser l'assemblage de la zone de fixation (421) respectivement avant et arrière avec la surface de fond (320) de la cavité (32).

4. Dispositif selon la revendication 3, **caractérisé en ce que** chaque point de liaison est adapté pour être réalisé par l'intermédiaire d'une liaison vissée ou d'une liaison soudée.

## Patentansprüche

1. Vorrichtung zur Befestigung einer hinteren Kraftfahrzeugsitzbank (1) auf einem Boden (2) des Kraftfahrzeugs, aufweisend mindestens ein Glied (3) zur Verankerung der Sitzbank (1), das dazu ausgeführt ist, fest an dem Boden (2) montiert zu werden, und einen Draht (31) umfasst, der dazu ausgeführt ist, zwischen einem ersten und einem zweiten Befestigungspunkt zu liegen, die beiderseits eines in dem Boden (2) ausgeführten Hohlraums (32) angeordnet sind, und einen im Wesentlichen mittleren Beanspruchungsbereich (311) aufweist, der dazu bestimmt ist, mit einem Verhakungsglied (13) zusammenzuwirken, das von einer Platte (11) getragen wird, die an einem Querträger (12) befestigt ist, der an der Rückseite der Sitzbank (1) in ihrem unteren Bereich angeordnet ist, wobei das Verankerungsglied (3) ein Verbindungsteil (4) umfasst, das den Draht (31) mit dem Hohlraum (32) verbindet, so dass Deformierungen des Drahts (31) entgegengewirkt wird, wenn der Draht (31) an seinem mittleren Beanspruchungsbereich (311) durch das Verhakungsglied (13) der Sitzbank beaufschlagt wird, **dadurch gekennzeichnet, dass** das Verbindungsteil (4) ein Strukturelement (41) aufweist, das dazu ausgeführt ist, beiderseits des mittleren Beanspruchungsbereichs (311) des Drahts (31) an dem Draht (31) anzuliegen, und nach vorne und hinten in Befestigungspratzen (42) übergeht, die zu einer Bodenfläche (320) des Hohlraums (32) gerichtet sind und deren jeweilige Enden (420) einen vorderen beziehungsweise hinteren Befestigungsbereich (421) mit der Bodenfläche (320) des Hohlraums (32) darstellen.

2. Vorrichtung nach Anspruch 1, **dadurch gekennzeichnet, dass** der vordere und/oder der hintere Befestigungsbereich (421) aus den jeweiligen Enden (420) von zwei unabhängigen Befestigungspratzen (42) bestehen.

3. Vorrichtung nach Anspruch 1 oder 2, **dadurch gekennzeichnet, dass** jeder vordere beziehungsweise hintere Befestigungsbereich (421) mindestens einen Verbindungspunkt umfasst, der dazu bestimmt ist, den Zusammenbau des vorderen beziehungsweise hinteren Befestigungsbereichs (421) mit der Bodenfläche (320) des Hohlraums (32) zu realisieren.

4. Vorrichtung nach Anspruch 3, **dadurch gekennzeichnet, dass** jeder Verbindungspunkt dazu ausgeführt ist, mittels einer Schraubverbindung oder einer Schweißverbindung realisiert zu werden.

## Claims

1. Fixing device for fixing a motor vehicle rear bench seat (1) to a motor vehicle floor (2), comprising at least one anchoring member (3) of the bench seat (1) adapted to be mounted securely on the floor (2), comprising a metal wire (31) adapted to rest between first and second fixing points situated on either side of a cavity (32) arranged in the floor (2) and presenting a substantially central loading zone (311) which is intended to cooperate with a catching member (13) carried by a plate (11) fixed to a cross member (12) arranged at the back of the bench seat (1) in its lower part, the anchoring member (3) comprising a linking piece (4) connecting the metal wire (31) to the cavity (32) so as to oppose deformation of the metal wire (31) when the metal wire (31) is loaded at its central loading zone (311) by the catching member (13) of the bench seat, **characterized in that** the linking piece (4) comprises a structural element (41) adapted to rest on the metal wire (31) on either side of the central loading zone (311) of the metal wire (31) and extending towards the front and rear by fixing lugs (42) which are directed towards a base surface (320) of the cavity (32), and the respective ends (420) of which constitute respective front and rear fixing zones (421) with the base surface (320) of the cavity (32).

2. Device according to Claim 1, **characterized in that** the front and/or rear fixing zones (421) are constituted by the respective ends (420) of two independent fixing lugs (42).

3. Device according to Claim 1 or 2, **characterized in that** each respective front and rear fixing zone (421) comprises at least one linking point intended to achieve the assembly of the respective front and rear fixing zone (421) with the base surface (320) of the cavity (32).

4. Device according to Claim 3, **characterized in that** each linking point is adapted to be achieved via a screwed or welded connection.
